# EUROPEAN PATENT APPLICATION

(11) **EP 4 415 232 A1**
(43) Date of publication of application: **14.08.2024**
(21) Application number: 23155886.7
(22) Date of filing: 09.02.2023
(51) Int. Cl.: H02K 3/42, H02K 21/24

(54) **RADIALLY OR AXIALLY ENHANCED ELECTRIC MOTOR**

(71) Applicant: Koenigsegg Automotive AB, 262 74 Ängelholm (SE)
(72) Inventor: POSTARIU, Dragos-Mihai, 262 70 STRÖVELSTORP (SE)
(74) Representative: Brann AB

(57) **Abstract**

An electric motor (10) is proposed comprising: a stator (12) and a rotor (14), wherein the stator (12) comprises a plurality of inductor elements (26), the rotor (14) comprises a plurality of permanent magnets (22) and a magnet holder (20) supporting the magnets (22), and the inductor elements (26) and the magnets (22) are arranged to cooperate for rotating the rotor (14) relative to the stator (12). Each magnet (22) has a closest position relative each inductor element (26) at which the magnet (22) moves in a first, direction relative to the inductor element (26). Each inductor element (26) comprises: an inductor core (30), a coil (32), and a core extender (34). For each inductor element (26), the inductor core (30) forms: an air-gap surface (36), an annular surface (38), and an annular edge (40). The air-gap surface (36) faces the rotor (14), the annular surface (38) is transverse to the air-gap surface (36), the annular edge (40) interconnects the air-gap surface (36) and the annular surface (38), and the coil (32) is wound around the annular surface (38) of the inductor core (30). Each magnet (22) extends relative to the inductor core (30) of the inductor element (26) in a second direction at the closest position relative to the inductor element (26), wherein the second direction is along the air-gap surface (36) and transverse to first direction, and the core extender (34) contacts the inductor core (30) at the annular edge (40) and extends relative to the inductor core (30) in the second direction.

## Description

### TECHNICAL FIELD

The proposed technology generally relates to the field electric motors, and in particular to the field of permanent-magnet motors.

### BACKGROUND

An electric motor is an electrical machine converting electrical energy into mechanical energy. An electric motor has a stator and a rotor that rotates relative to the stator. The components are typically positioned in a housing that supports the stator and the rotor is supported by bearings allowing it to rotate relative to the stator. Permanent magnet motors operate through the interaction between dynamically generated magnetic fields and permanent magnets. In a subgroup of such motors the permanent magnets are fixed to the rotor and the stator has inductor elements that cooperate with the magnets to rotate the rotor. The magnets and the inductor elements are spaced apart with an airgap between them. The magnetic flux in the airgap is either axial or radial. In axial-flux motors the magnetic flux is parallel to the rotational axis and in radial-flux motors the magnetic flux is radial to the rotational axis of the rotor.

### SUMMARY

An object of the proposed technology is to improve the performance of permanent magnet motors, such as the power density and torque density. Here, the density is understood as the delivered power or torque per unit weight.

In a first aspect of the proposed technology, an electric motor is proposed comprising a stator and a rotor, wherein the rotor has a rotational axis and is rotationally arranged, or rotationally supported, relative to the stator. The stator comprises a plurality of inductor elements. The rotor comprises a plurality of permanent magnets and a magnet holder, or carrier, supporting the magnets. The inductor elements and the magnets are arranged to cooperate for rotating the rotor relative to the stator. Each magnet has a closest position relative each inductor element at which the magnet moves in a first direction relative to the inductor element, or in a tangential direction relative to the rotational axis.

Each inductor element comprises: an inductor core, a coil, and a core extender. For each inductor element, the inductor core forms, or has, an air-gap surface, an annular, or circumferential, surface, and an annular, or circumferential, edge. The air-gap surface faces the rotor, the annular surface is transverse, or perpendicular, to the air-gap surface, and the annular edge interconnects the air-gap surface and the annular surface. The coil is wound around the annular surface of the inductor core. Each magnet extends relative to, or from, the inductor core of the inductor element in a second direction at the closest position relative to the inductor element, wherein the second direction is along, or parallel to, the air-gap surface and transverse, or perpendicular, to first direction. The core extender contacts, or connects to, the inductor core at the annular edge and extends relative to, or protrudes from, the inductor core in the second direction.

That the core extender extends from the inductor core in the second direction means that it extends in the same direction as a magnet relative to the inductor core when the magnet is in the closest position. The coil is wound around the annular surface of the inductor core. And the core extender contacts the inductor core at the annular edge. This contributes to shield the coil from the magnets and reduce conductor losses in the coil, which in turn leads to an improved power density. It is understood that the core extender is configured, or arranged, to guide, a magnetic field from the inductor core both perpendicularly to the air-gap surface and in the second direction. Worded differently, it is configured, or arranged, to expand a magnetic field within the inductor core to extend from both the inductor core and the core extender to the magnet. This contributes to improve the torque density of the electric motor.

The electric motor may be an axial-flux motor. Here, an axial-flux motor is understood to have the stator and the rotor arranged with the air gaps between the inductor cores and the magnets aligned, or parallel, with the axis of rotation of the rotor. It is further understood that the poles of each magnet are aligned, or arranged parallel, with the axis of rotation of the rotor. This means that the magnetic flux in the air gap is predominantly aligned, or parallel, with the axis of rotation. In this configuration, the inductor cores may be arranged in series in a circular pattern and the magnets may be arranged in a series in a corresponding circular pattern that is concentric with the circular pattern of the inductor cores and axially displaced relative to the inductor cores. The number of inductor elements and the number of magnets may be the same.

In the axial-flux motor, the second direction is radial to, or transverse to, the rotational axis of the rotor. Wording the first aspect of the proposed technology differently, an axial-flux motor is proposed comprising a stator and a rotor. The rotor has a rotational axis and is rotationally arranged, or rotationally supported, relative to the stator. The stator comprises a plurality of inductor elements, the rotor comprises a plurality of permanent magnets and a magnet holder, or carrier, supporting the magnets. Each magnet has a closest position relative to each inductor element. The inductor elements and the magnets are arranged to cooperate for rotating the rotor relative to the stator. Each inductor element comprises: an inductor core, a coil, and a core extender. For each inductor element, the coil is wound around the annular surface of the inductor core. At the closest position relative to the inductor element, each magnet extends radially relative to, or from, the inductor core of the inductor element, and the core extender contacts, or connects to, the inductor core at the annular edge and extends, or protrudes, radially relative to, or from, the inductor core in the same direction as the magnet.

Here, radially is understood to be transverse to, or perpendicular to, the rotational axis of the rotor. The magnets and the core extenders may extend radially outward relative to the inductor core. The resulting greater distance between the outer part of the magnets to the rotational axis contributes to an improved torque density.

The axial-flux motor may be a single-sided axial-flux motor. This means that it has a single stator and a single rotor. Alternatively, the axial-flux motor is a dual-stator axial-flux motor. The electric motor then has an additional stator sharing the features of the above-described stator but arranged with the air-gap surfaces of the inductor cores facing the stator. The rotor is then arranged between the stator and the additional stator. Alternatively, the axial-flux motor may be a double-sided axial-flux motor. The electric motor then has an additional rotor sharing the features of the above-described rotor. The stator is then positioned between the rotor and the additional rotor. The inductor core of each inductor element may form, or have, an additional air-gap surface and an additional annular, or circumferential, edge. The additional air-gap surface faces the additional rotor, the annular surface is transverse, or perpendicular, to the additional air-gap surface, and the additional annular edge interconnects the additional air-gap surface and the annular surface. Alternatively, the stator of the double-sided axial-flux motor may have a plurality of additional inductor elements sharing the features of the above-described inductor elements but arranged with the air-gap surfaces facing the additional rotor. The stator may comprise a stator yoke positioned between the plurality of inductor elements and the plurality of additional inductor elements and interconnecting the inductor cores of the inductor elements and the additional inductor elements. The inductor elements may be arranged to primarily cooperate with the rotor and the additional inductor elements may be arranged to cooperate with the additional rotor.

For each inductor core, the airgap surface, or a cross-section of the inductor core transverse to the rotational axis, may have a profile, or an outline, that widens radially outward, or with the radial distance from rotational axis. For example, the airgap surface may outline a circle sector truncated at the radially inner end. Similarly, each magnet may have a cross-section transverse to the rotational axis with a profile, or an outline, that widens with the radial distance from rotational axis. It is specified above that the magnets and the core extenders may extend radially outward relative to the inductor core. With the specified profiles of the inductor cores and the magnets, the core extenders then contribute to improved saturation properties of the inductor cores.

The electric motor may be a radial-flux motor. Here, a radial-flux motor is understood to have the stator and the rotor arranged with the air gap between the inductor cores and the magnets transverse to, or radial relative to, the axis of rotation of the rotor. It is further understood that the poles of each magnet are arranged transversely to, or radially relative to, the axis of rotation of the rotor. This means that the magnetic flux in the air gap is predominantly transverse to, or radial relative to, the axis of rotation. In this configuration, the inductor cores may be arranged in series in a circular pattern and the magnets may be arranged in a series in a circular pattern that is concentric with the circular pattern of the inductor cores and radially displaced relative to the inductor cores. The inductor cores may be positioned radially outside of the magnets. The number of inductor elements and the number of magnets may be the same.

In the radial-flux motor, the second direction is axial relative to, or aligned with, the rotational axis. Wording the first aspect of the proposed technology differently, an axial-flux motor is proposed comprising a stator and a rotor. The rotor has a rotational axis and is rotationally arranged, or rotationally supported, relative to the stator. The stator comprises a plurality of inductor elements. The rotor comprises a plurality of permanent magnets and a magnet holder, or carrier, supporting the magnets. Each magnet has a closest position relative to each inductor element. The inductor elements and the magnets are arranged to cooperate for rotating the rotor relative to the stator. Each inductor element comprises: an inductor core, a coil, and a core extender. For each inductor element, the coil is wound around the annular surface of the inductor core. At the closest position relative to the inductor element, each magnet extends axially relative to, or from, the inductor core of the inductor element, and the core extender contacts, or connects to, the inductor core at the annular edge and extends, or protrudes, axially relative to, or from, the inductor core in the same direction the magnet. Here, axially is understood to be in a direction aligned with, or parallel to, the rotational axis of the rotor.

The coil of each inductor element may be spaced apart from the annular edge, or the air-gap surface, and the core extender may contact, or connect to the annular surface of the inductor core between the coil and the annular edge. This contributes to an improved magnetic coupling between the inductor core and the core. The coil being spaced apart from the annular edge means that the coil partly covers the annular surface.

The core extender may extend, or protrude, from the inductor core toward the rotor, or toward a magnet at the closest position of the magnet relative to the inductor element. Worded differently, the core extender may be closer to the rotor, or the magnets of the rotor, than the inductor core, or the air-gap surface of the inductor core. This means that the airgap between the core extender and a magnet is narrower than then airgap between the inductor core and the magnet. This contributes to align the magnetic field from the core extender transversely to the air-gap surface at the magnets, which improves the power density. Alternatively, the core extender may have an extender surface facing in the same directions as the airgap surface of the inductor core it contacts. The extender surface and the airgap surface may be coplanar.

Each inductor element may further comprise a magnetic shield arranged to magnetically shield the coil from the magnets of the rotor. The magnetic shield may be positioned at, contact, or be flush with, the coil. The magnetic shield may be spaced apart from the annular edge.

The magnetic shield may contact the annular surface of the inductor core. The magnetic shield may be attached to, or biased against, the annular surface of the inductor core. For example, the magnetic shield may be press fitted or a shrink fitted on the inductor core. The core extender may be attached to the magnetic shield. This way, the magnetic shield may support the core extender relative to the inductor core.

The magnetic shield may be annular and encircle the inductor core, or the annular surface or the inductor core. The core extender may then be positioned between the magnetic shield and the annular edge. Worded differently, the magnetic shield may be positioned between the coil and the core extender. The core extender may then be positioned at, contact, or be flush with, the magnetic shield.

Alternatively, the magnetic shield may form a gap, the core extender is positioned in the gap, and the magnetic shield and the core extender jointly encircle the inductor core, or the annular surface or the inductor core. The gap is understood to have two ends, and the core extender may contact, or be attached to, the magnetic shield at both ends of the gap. It is understood that the magnetic shield and the core extender may jointly shield the coil from the magnets.

The annular surface of inductor core of each inductor element may have, or define, a surface width transverse, or perpendicular, to the air-gap surface. The core extender of each inductor element may have, or define, an extender width transverse, or perpendicular, to the air-gap surface. In the axial-flux motor, the surface width and the extender width are understood to be aligned with the rotational axis of the rotor, and in the radial-flux motor these widths are understood to be radial to, or transverse to, the rotational axis of the rotor. The extender width may be less than 40%, or less than 20%, of the surface width. The extender width may be greater than 5%, or greater than 10%, of the surface width. This contributes to an improved magnetic coupling between the inductor core and the core extender, which in extension contributes to improved torque and power densities. The magnets may have, or define, a magnet width transverse, or perpendicular, to the air-gap surface. In the axial-flux motor, the magnet width is understood to be aligned with the rotational axis of the rotor, and in the radial-flux motor the magnet width is understood to be radial to, or transverse to, the rotational axis of the rotor. The extender width may be less than 50%, or less than 40%, of the magnet width. The extender width may be greater than 5%, or greater than 10%, of the magnet width. The extender widths specified here contribute to reduce magnetic saturation in the core extender, and in extension allows for stronger magnets to be used. It is understood that the magnetic field strength increases with the magnet width. The coil of each inductor element may comprise, or be composed of, a conductor bundle formed from an electrically insulated conductor, such as a copper wire or a flat copper strip. The conductor bundle may have, or define, a bundle width transverse, or perpendicular, to the air-gap surface of the inductor element. In the axial-flux motor, the bundle width is understood to be or aligned with the rotational axis of the rotor, and in the radial-flux motor it is understood to be radial to, or transverse to, the rotational axis of the rotor. The bundle width may correspond to the width of the coil transverse, or perpendicular, to the air-gap surface. It is understood that the bundle width is equal to or smaller than the surface width. The latter must be true if the core extender contacts the annular surface. The bundle width may be greater than the extender width. The extender width may be less than 60%, or less than 40%, of the bundle width.

The conductor bundle may have, or define, a bundle height in the second direction. It is understood that the bundle height relates to the bundle as such and not to the complete coil. The core extender of each inductor element may have, or define, an extender height in the second direction. In the axial-flux motor, the bundle height and the extender height are understood to be radial to, or transverse to, the rotational axis of the rotor, and in the radial-flux motor these heights are understood to be aligned with the rotational axis of the rotor. The extender height may be greater than the bundle height. The extender height may be greater than 110%, or greater than 120%, of the bundle height. The extender height may be smaller than 200%, or smaller than 150%, of the bundle height. This contributes to an improved magnetic shielding of the coil. This contributes to an improved magnetic shielding of the coil.

The inductor core of each inductor element may have, or define, a core length in the first direction at the core extender. The core extender of the inductor element may have, or define, an extender length in the first direction. In both the axial-flux motor and the radial-flux motor, the core length and the extender length are understood to be tangential to the rotational axis of the rotor. The extender length may be greater than 90% of the core length. The extender length may be smaller than 110% of the core length. This contributes to an improved magnetic shielding of the coil.

The magnetic shield of each inductor element may extend less outward relative to, or protrude less outward from, the inductor core than the coil. Worded differently, both the coil and the magnetic shield may have an outward extension relative to the annular surface of the inductor core, and the outward extension of magnetic shield may be less than the outward extension of the coil. It is understood that the outward extension is normal to the annular surface. The outward extension of the magnetic shield may be smaller than 95%, or smaller than 90%, of the outward extension of the coil. It has been found that if the outward extension of the magnetic shield is greater, it may interfere magnetically with neighboring inductor elements. The outward extension of the magnetic shield may be greater than 65%, or greater than 70%, of the outward extension of the coil. It has been found that smaller outward extensions of the magnetic shield do not provide adequate shielding.

The magnetic shield of each inductor element may have, or define, a shield width transverse, or perpendicular, to the air-gap surface. In the axial-flux motor, the shield width is understood to be aligned with the rotational axis of the rotor, and in the radial-flux motor the shield width is understood to be radial to, or transverse to, the rotational axis of the rotor. The shield width may be smaller than the above defined extender width of the core extender. The shield width may be smaller than the above defined extender width of the core extender. The shield width may be less than 15%, less than 10%, or less than 5%, of the magnet width. This contributes to magnetically saturate the magnetic shield and shield the coil from the magnets.

It is understood that the above widths, heights, and lengths may respectively be average widths, average heights, and average lengths. It has been found that the above defined relative dimensions are advantageous with respect to torque and power densities.

The inductor core may have a first side, a second side, a third side, and a fourth side that are arranged in series and jointly form the annular surface. It is understood that the four sides face different directions. The core extender may contact the inductor core at the first side. It may be disjoint from the second side, the third side, and the fourth side. This means that it does not contact the second side, the third side, or the fourth side. It may further be disjoint from the air-gap surface. This means that it does not contact the air-gap surface. The core extender may extend from a first point at an interconnection between the first side and the second side to a second point at an interconnection between the first side and the fourth side. The separation between the first point and the second point may define the extender length, which is further discussed above. The coil and the core extender may jointly cover the complete first side of the inductor core. In the axial-flux motor, the first side may face radially outward, and in the radial-flux motor, the first side may face in a direction parallel with the rotational axis.

It is specified above that the magnetic shield may be annular and encircle the inductor core, or the annular surface or the inductor core. The magnetic shield may then contact, or be flush with, the annular surface of the inductor core at the first side, the second side, the third side, and the fourth side of the inductor core. The magnetic shield may be positioned between the coil and the core extender at the first side of the inductor core.

It is also specified that the magnetic shield may form a gap with the core extender positioned in the gap and the magnetic shield and the core extender jointly encircling the inductor core. The gap may then be located at the first side and the magnetic shield may then contact, or be flush with, the annular surface of the inductor core only at the second side, the third side, and the fourth side of the inductor core.

The air-gap surface may be planar. The inductor core may define a cylindrical geometry. The annular surface of the inductor core of each inductor element may be cylindrical or define a cylindrical geometry. It is understood that the annular surface may envelop, or encircle, the complete inductor core. The coil of the inductor element and the annular surface may be concentric, or coaxial. In other words, the cylindrical annular surface may have a cylinder axis and the coil may have a coil axis that is aligned, or coaxial, with the cylinder axis. The abovementioned magnetic shield may have a sheet-like structure. It may define planar geometry that is parallel with, or aligned with, the airgap surface.

The inductor core may widen in the first direction with the distance from the rotational axis of the rotor. Worded differently, the inductor core may have a tangential core width in the first direction that increases with the radius, or distance, relative to the rotational axis. It is understood that the tangential width at the core extender is the same as the above defined core length. This means that the first side of the inductor core has a greater width than the opposite third side of the inductor core. It also means that that the width of the cross-section perpendicular to the rotational axis increases with the distance to the rotational axis. Similarly, each magnet may widen in the first direction with the distance from the rotational axis of the rotor. Worded differently, the magnet may have a tangential magnet width in the first direction that increases with the radius, or distance, relative to the rotational axis. With these geometries in an axial-flux motor, magnetic saturation is typically reached in the radially inner parts of the inductor core that are narrower before saturation is reached in the radially outer parts of the inductor core that are wider. In an axial-flux motor, the core extender may protrude radially outward relative to the inductor core. This means that the core extender is positioned at the wider portion of the inductor core, which contributes to a more homogeneous magnetic saturation in the inductor core. In extension, this leads to an improved power and torque density.

The core extender of each inductor element may be flush with the inductor core, or the annular surface of the inductor core. This means that there is no air gap between the inductor core and the core extender. For example, the core extender may contact the annular surface along the complete separation between the first point at the interconnection between the first side and the second side and the second point at the interconnection between the first side and the fourth side.

The inductor core of each inductor element may be of a first magnetic material. The first magnetic material may be ferromagnetic. The first magnetic material may be composed of a sandwiched steel sheet structure, for example of electrical/silicon steel. The sheet structure may have layers that are arranged tangentially relative to the rotational axis. The sheet structure may have an electrically insulating layer between each layer.

The core extender of each inductor element may be of a second magnetic material that is different from the first magnetic material. The second magnetic material may be ferromagnetic. For example, the second magnetic material may be of soft iron, ferrite, or a pressed powder material. The latter is understood to form a powdered core extender having similar material properties as powdered inductor cores. The core extender may be a monolithic structure. This means that it is not composed of sandwiched sheets. This contributes to extend the magnetic field in the second direction, and in extension to improved torque and power densities.

The magnetic shield of each inductor element may be of a third magnetic material that is different from the second magnetic material. The third magnetic material may be ferromagnetic. The third magnetic material may be steel, for example of electrical/silicon steel.

The stator may comprise a stator yoke interconnecting the inductor cores of the inductor elements. The stator yoke may be of the same material as the inductor cores. The stator yoke may be seamlessly joined to the inductor cores. It may be of the same material as the inductor cores. The air-gap surface of the inductor core of each inductor element may face away from the stator yoke. Worded differently, the inductor core of each inductor element may connect to the stator yoke on the opposite side relative to its air-gap surface. It is understood that the stator yoke may be annular and concentric with, or centered on, the rotational axis.

The electric motor may further comprise a housing that encloses the stator. The housing may support the stator. The rotor may further comprise a motor shaft, and the magnet holder is fixed relative to the motor shaft. It is understood that the motor shaft is arranged to rotate around, or concentrically with, the rotational axis of the rotor. The electric motor may further comprise a bearing that rotationally connects, or supports, the rotor relative to the housing, and in extension relative to the stator. The bearing may interconnect the rotor, or the motor shaft, and the housing.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended schematic drawings, wherein:
Figure 1 is a cross-sectional view of the upper part of an axial-flux motor.
Figure 2 is an axial view of an inductor element and a magnet of the electric motor of Figure 1.
Figure 3 is an axial view of the stator of Figure 1.
Figure 4 is an axial view of the rotor of Figure 1.
Figure 5 is a cross-sectional view of the upper part of an alternative axial-flux motor.
Figure 6 is a cross-sectional view of the upper part of a radial-flux motor.
Figures 7a and 7b are a side view respective an axial view of an alternative inductor element.
Figures 8a and 8b are a side view respective an axial view of an another alternative inductor element.

### DETAILED DESCRIPTION OF THE DRAWINGS

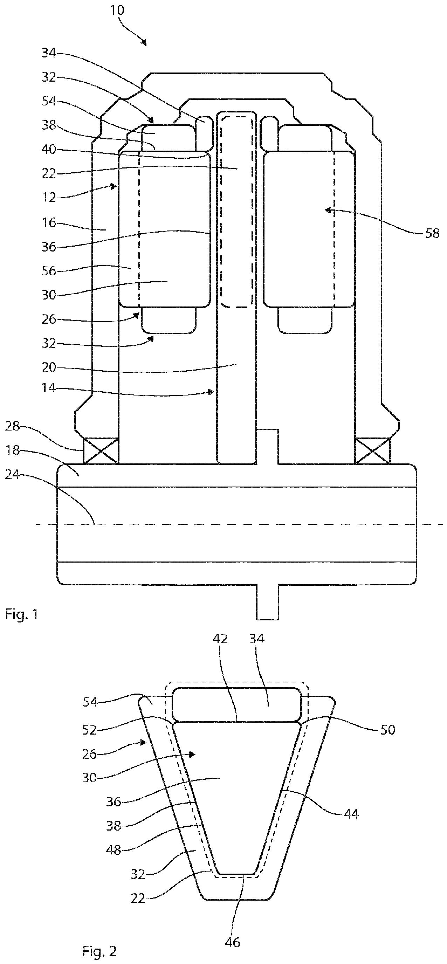

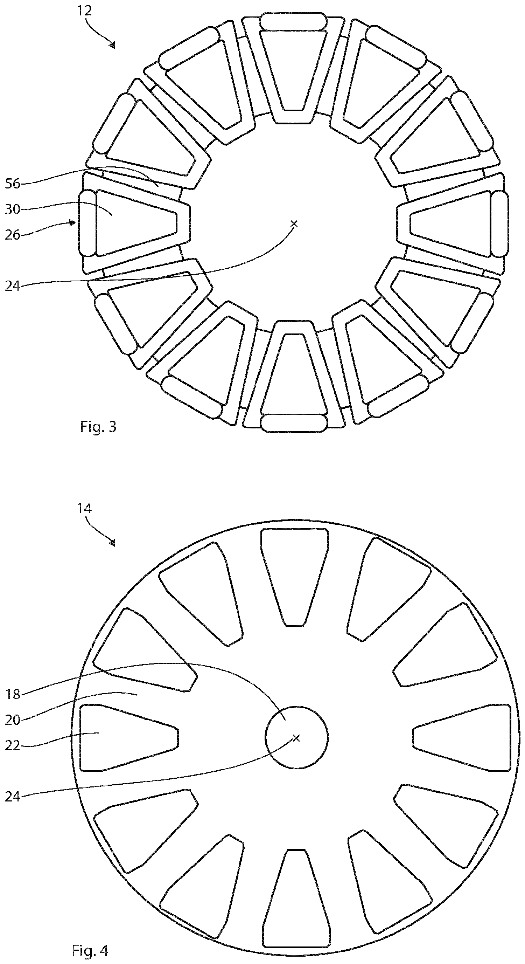

An embodiment of an electric motor 10 is shown in Figure 1. The electric motor 10 is an axial-flux motor 10. It has a stator 12 and a rotor 14 enclosed by a housing 16 that also supports the stator 12. The rotor 14 has a shaft 18, a magnet holder 20 attached to the shaft 18, and twelve permanent magnets 22 fixed to and supported by the magnet holder 20. The magnets 22 are arranged in a series in circular pattern, as shown in Figure 4. The electric motor 10 further has bearings 28 interconnecting the shaft 18 and the housing 16 and rotationally supporting the rotor 14 relative to the housing 16, and in extension relative to the the stator 12. This way, the rotor 14 has a rotational axis 24 around which it can rotate.

The stator 12 has twelve inductor elements 26 arranged in series in a circular pattern concentric with and matching the circular pattern of the magnets 22, as shown in Figure 3. Each inductor element 26 has an inductor core 30, a coil 32, and a core extender 34. The latter contacts the inductor core 30 at the annular edge 40. The inductor core 30 forms a planar air-gap surface 36 that faces the rotor 14. It also has an annular surface 38 that is transverse to the air-gap surface 36, and the annular edge 40 interconnects the air-gap surface 36 and the annular surface 38. The stator has an annular stator yoke 56 interconnecting the inductor cores 30 of the inductor elements 26. The stator yoke 56 is seamlessly joined to and of the same material as the inductor cores 30. The air-gap surfaces 36 of the inductor cores 30 face away from the stator yoke 56. The magnets 22 are axially displaced relative to the inductor cores 30, thus forming an airgap between the magnets and the inductor cores 30. This way, the inductor elements 26 and the magnets 22 are arranged to cooperate for rotating the rotor 14 relative to the stator 12.

The inductor cores 30 and the stator yoke 56 are manufactured from a single sheet of ferromagnetic silicon steel wound in a spiral pattern centered around the rotational axis 24 to form a sandwiched sheet structure of ferromagnetic silicon steel. The sheet structure has an electrically insulating coating between each layer. The core extender 34 is a single monolithic piece of ferromagnetic soft iron.

Each magnet 22 has a closest position relative each inductor element 26. In Figure 1, the magnet 22 is depicted in its closest position relative to the inductor element 26. In this position, the magnet 22 moves in a first direction relative to the inductor element 26. The closest position of a magnet 22 to an inductor element 26 is indicated by the dashed line in Figure 2. The first direction is tangential to the rotational axis 24, which means that it is normal to the view in Figure 1 and to the right or left in Figure 2. As can be seen in Figures 2 and 4, the magnets 22 widen in the tangential first direction with the distance from the rotational axis 24 of the rotor 14.

The inductor core 30 defines a cylindrical geometry and the annular surface 38 is cylindrical and encircles the complete inductor core 30. The coil 32 is wound around the annular surface 38 of the inductor core 30. The coil 32 is spaced apart from the annular edge 40 and the air-gap surface 36 and thus only partly covers the annular surface 38. The cylinder axis of the cylindrical annular surface 38 and the coil axis of the coil 32 are colinear and parallel with the rotational axis 24 . As can be seen in Figures 2 and 3, the inductor core 30 widen in the tangential first direction with the distance from the rotational axis 24 of the rotor 14.

The inductor core 30 has a first side 42, a second side 44, a third side 46 and a fourth side 48 facing different directions and arranged in series to jointly form the annular surface 38. The core extender 34 is flush with the inductor core 30 and contacts the annular surface 38 at the first side 42 and is disjoint from the second side 44, the third side 46, the fourth side 48, and the air-gap surface 36. The coil 32 and the core extender 34 jointly cover the complete first side 42 of the inductor core 30. The core extender 34 extends from the inductor core toward the rotor 14 and is closer to the magnet 22 than the inductor core 30.

The core extender 34 extends from a first point at the interconnection 50 between the first side 42 and the second side 44 to a second point at the interconnection 52 between the first side 42 and the fourth side 48. The core extender 34 contacts the inductor core 30 at the complete separation between the first point and the second point, and the length of the core extender 34 corresponds to the separation between the first point and the second point. The extender length is in the tangential first direction, which is normal to the view in Figure 1 and horizontal to the view in Figure 2. The inductor core 30 has a core length at the core extender 34 in the same direction that is approximately the same as the extender length.

The annular surface 38 of inductor core 30 has a surface width perpendicular to the air-gap surface 36. This means that the surface width is parallel to the rotational axis 24 that is horizontal to the view in Figure 1 and normal to the view in Figure 2. The core extender 34 has an extender width in the same direction that is about 25% of the surface width. The magnets 22 have a magnet width perpendicular to the air-gap surface 36. The extender width of the core extender 34 is about 35% of the magnet width.

As can be seen in Figures 1 and 2, in its closest position relative to the inductor element 26, each magnet extends from the inductor core 30 in a second direction that radially outward relative to the rotational axis 24. The second direction is upward in the views of Figures 1 and 2. This means that the second direction is parallel to the air-gap surface 36 and perpendicular to first direction. The core extender 34 protrudes from the inductor core 30 in the radial second direction, which means that that it extends in the same direction as a magnet 22 relative to the inductor core 30.

The coil 32 is composed of a flat copper strip formed into a conductor bundle 54. The conductor bundle 54 has a bundle width that is also perpendicular to the air-gap surface 36. The extender width is about 35% of the bundle width. The conductor bundle 54 has a bundle height in the radial second direction. The core extender 34 has an extender height in the same direction that is about 130% of the bundle height.

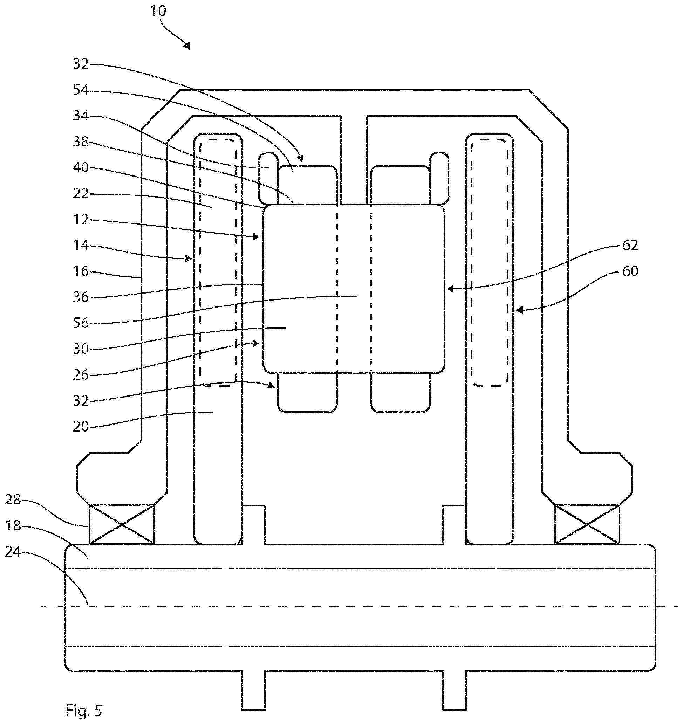

The electric motor 10 shown in Figure 1 is a dual-stator axial-flux motor. The electric motor 10 has an additional stator 58 sharing the features of the above-described stator 12 but arranged with the air-gap surfaces of the inductor cores facing the stator 12. The rotor 14 is arranged between the stator 12 and the additional stator 58. In an alternative embodiment, the electric motor 10 is a single-sided axial-flux motor having no additional stator. In another alternative embodiment shown in Figure 5, the electric motor 10 is a double-sided axial-flux motor. In addition to the single-sided axial-flux motor, the electric motor 10 has an additional rotor 60 sharing the features of the rotor 14 of Figure 1. The stator 12 is positioned between the rotor 14 and the additional rotor 60. The stator 12 has a plurality of additional inductor elements 62 sharing the features of the inductor elements 26 described in relation to Figure 1, but arranged with the air-gap surfaces facing the additional rotor 60. The stator yoke 56 is positioned between the plurality of inductor elements 26 and the plurality of additional inductor elements 62 and interconnects the inductor cores 30 of the inductor elements 26 and the additional inductor elements 62.

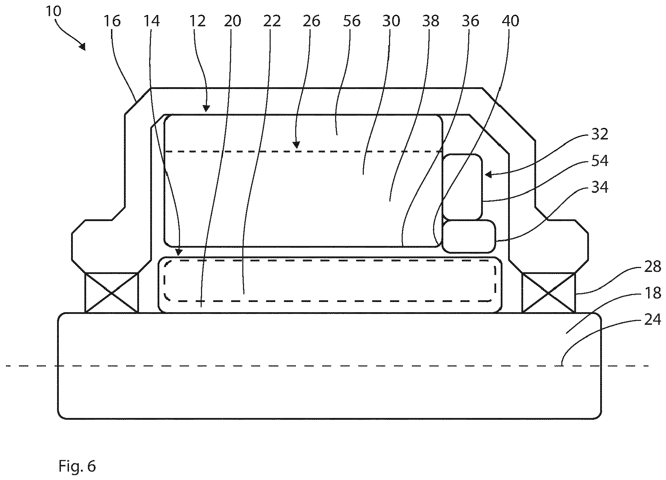

Another embodiment of an electric motor 10 is shown in Figure 6. The electric motor 10 is a radial-flux motor 10. The electric motor 10 has the corresponding features of the radial-flux motor 10 in Figure 1, but with the air-gap surfaces 36 of the inductor cores 30 facing radially inward. The inductor cores 30 and the stator yoke 56 are manufactured from a single sheet ferromagnetic silicon steel wound in a spiral pattern building along the rotational axis 24. As in the embodiment of Figure1, each magnet 22 has a closest position relative each inductor element 26. The stator 12 has twelve inductor elements 26 and twelve permanent magnets 22. The magnets 22 are arranged in a series in circular pattern and the inductor elements 26 arranged in series in a circular pattern coaxial with and matching the circular pattern of the magnets 22. In the cross -sectional view of Figure 6, the magnet 22 is depicted in its closest position relative to the inductor element 26. In this position, the magnet 22 moves in a first direction relative to the inductor element 26. The first direction is tangential to the rotational axis 24, which means that it is normal to the view in Figure 6, as in the embodiment of Figure 1.

The inductor core 30 of each inductor element 26 defines a cylindrical geometry and the annular surface 38 is cylindrical and encircles the complete inductor core 30. The coil 32 is wound around the annular surface 38 of the inductor core 30. The cylinder axis of the cylindrical annular surface 38 and the coil axis of the coil 32 are colinear and radial relative to the rotational axis 24 of the rotor 14.

The core extender 34 protrudes from the inductor core 30 in an axial second direction relative to the rotational axis 24. This means that the second direction is parallel to the air-gap surface 36 and perpendicular to the tangential first direction, as in the embodiment of Figure 1. The axial second direction is to the right in the view of Figure 6.

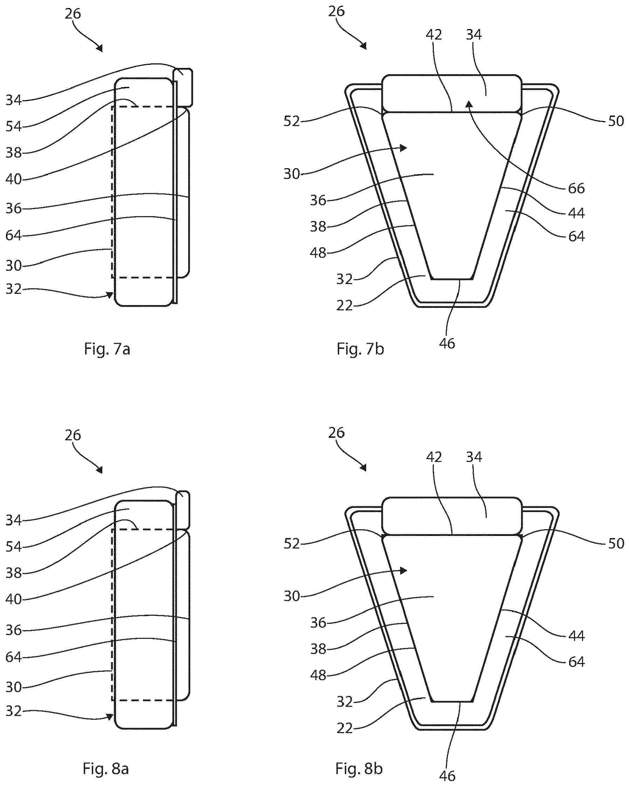

Figure 2 shows the inductor element 26 of the electric motor 10 in Figure 1. In an alternative embodiment, each inductor element 26 additionally has a magnetic shield 64, as shown in Figures 7a and 7b. The magnetic shield 64 is a sheet-like structure of ferromagnetic steel that defines a planar geometry parallel to the air-gap surface 36. The magnetic shield 64 contacts the coil 32 and is spaced apart from the annular edge 40 of the inductor core 30. The magnetic shield 64 also contacts the annular surface 38 of the inductor core 30 and extends outward from the annular surface 38 along the normal to the annular surface 38. The magnetic shield 64 is attached to the annular surface 38 by a press fit.

The magnetic shield 64 forms a gap 66 at the first side of the inductor core 30 and is flush with the inductor core 30 at the second side 44, the third side 46, and the fourth side 48. The core extender 34 is positioned in the gap 66 and contacts the magnetic shield 64 at both ends of the gap 66. This way, the magnetic shield 64 and the core extender 34 jointly encircle the inductor core 30 and jointly shield the coil 32 from the magnets. The core extender 34 is attached to the magnetic shield 64 that supports the core extender 34 relative to the inductor core 30.

The magnetic shield 64 extends less outward relative to the inductor core 30 than the coil 32. Relative to the normal of the annular surface 38, the outward extension of the magnetic shield 64 is about 80% of the outward extension of the coil 32. The magnetic shield 64 has a shield width transverse to the air-gap surface 36 that is about 5% of the magnet width of the magnets 22 in the same direction. This way, the magnetic shield 64 is arranged to magnetically shield the coil 32 from the magnets 22 of the rotor 14.

Another alternative inductor element 26 for the electric motor of Figure 1 is shown in Figures 8a and 8b. It differs from the inductor element in Figures 7a and 7b by the magnetic shield 64 being annular and encircling the inductor core 30. The magnetic shield 64 is positioned between the coil 32 and the core extender 34 at the first side 42 of the inductor core 30. The core extender 34 is attached ti the magnetic shield 64, which means that it is also contacts and is flush with the magnetic shield 64.

### ITEM LIST

10 electric motor
12 stator
14 rotor
16 housing
18 motor shaft
20 magnet holder
22 magnet
24 rotational axis
26 inductor element
28 bearing
30 inductor core
32 coil
34 core extender
36 air-gap surface
38 annular surface
40 annular edge
42 first side of inductor core
44 second side of inductor core
46 third side of inductor core
48 fourth side of inductor core
50 interconnection between the first side and the second side
52 interconnection between the first side and the fourth side
54 conductor bundle
56 stator yoke
58 additional stator
60 additional rotor
62 additional inductor elements
64 magnetic shield
66 gap

## Claims

1. An electric motor (10) comprising:
- a stator (12) and
- a rotor (14),
wherein the rotor (14) has a rotational axis (24) and is rotationally arranged relative to the stator (12), the stator (12) comprises a plurality of inductor elements (26), the rotor (14) comprises a plurality of permanent magnets (22) and a magnet holder (20) supporting the magnets (22), the inductor elements (26) and the magnets (22) are arranged to cooperate for rotating the rotor (14) relative to the stator (12), each magnet (22) has a closest position relative to each inductor element (26) at which the magnet (22) moves in a first direction relative to the inductor element (26), each inductor element (26) comprises:
- an inductor core (30),
- a coil (32), and
- a core extender (34),
wherein, for each inductor element (26), the inductor core (30) forms:
- an air-gap surface (36),
- an annular surface (38), and
- an annular edge (40),
wherein the air-gap surface (36) faces the rotor (14), the annular surface (38) is transverse to the air-gap surface (36), the annular edge (40) interconnects the air-gap surface (36) and the annular surface (38), the coil (32) is wound around the annular surface (38) of the inductor core (30), each magnet (22) extends relative to the inductor core (30) of the inductor element (26) in a second direction at the closest position relative to the inductor element (26), wherein the second direction is along the air-gap surface (36) and transverse to first direction, and the core extender (34) contacts the inductor core (30) at the annular edge (40) and extends relative to the inductor core (30) in the second direction.

2. The electric motor (10) according to claim 1, wherein the electric motor (10) is an axial-flux motor (10) and the second direction is radially outward relative to the rotational axis (24) of the rotor (14).

3. The electric motor (10) according to claim 1, wherein the electric motor (10) is a radial-flux motor (10) and the second direction is axial relative to the rotational axis (24).

4. The electric motor (10) according to any of the claims 1 to 3, wherein the coil (32) of each inductor element (26) is spaced apart from the annular edge (40) and the core extender (34) contacts the annular surface (38) of the inductor core (30) between the coil (32) and the annular edge (40).

5. The electric motor (10) according to any of the claims 1 to 4, wherein each inductor element (26) further comprise a magnetic shield (64) arranged to magnetically shield the coil (32) from the magnets (22) of the rotor (14).

6. The electric motor (10) according to any of the claims 1 to 5, wherein the annular surface (38) of the inductor core (30) of each inductor element (26) has a surface width transverse to the air-gap surface (36), the core extender (34) has an extender width transverse to the air-gap surface (36), the extender width is less than 40%, or less than 20%, of the surface width, and the extender width is greater than 5%, or greater than 10%, of the surface width.

7. The electric motor (10) according to any of the claims 1 to 6, wherein each magnet (22) has a magnet width transverse to the air-gap surface (36), the core extender (34) has an extender width transverse to the air-gap surface (36), the extender width is less than 50%, or less than 40%, of the magnet width, and the extender width is greater than 5%, or greater than 10%, of the magnet width.

8. The electric motor (10) according to any of the claims 1 to 7, wherein the coil (32) of each inductor element (26) is composed of a conductor bundle (54) formed from an electrically insulated conductor, the conductor bundle (54) has a bundle height in the second direction, the core extender (34) has an extender height in the second direction, the extender height is greater than 100%, or greater than 120%, of the bundle height, and the extender height is smaller than 200%, or smaller than 150%, of the bundle height.

9. The electric motor (10) according to any of the claims 1 to 8, wherein the inductor core (30) of each inductor element (26) has a core length in the first direction at the core extender (34), the core extender (34) has an extender length in the first direction, the extender length is greater than 90% of the core length, and the extender length is smaller than 110% of the core length.

10. The electric motor (10) according to any of the claims 1 to 9, wherein the inductor core (30) of each inductor element (26) has a first side (42), a second side (44), a third side (46) and a fourth side (48) that are arranged in series and jointly form the annular surface (38), the core extender (34) contacts the inductor core (30) at the first side (42) and is disjoint from the second side (44), the third side (46), the fourth side (48), and the air-gap surface (36), and the coil (32) and the core extender (34) jointly cover the complete first side (42) of the inductor core (30).

11. The electric motor (10) according to any of the claims 1 to 10, wherein the inductor core (30) of each inductor element (26) defines a cylindrical geometry, the inductor core (30) widens in the first direction with the distance from the rotational axis (24) of the rotor (14).

12. The electric motor (10) according to any of the claims 1 to 11, wherein the core extender (34) of each inductor element (26) is flush with the inductor core (30).

13. The electric motor (10) according to any of the claims 1 to 12, wherein the inductor core (30) of each inductor element (26) is a first magnetic material, the first magnetic material is ferromagnetic and composed of a sandwiched steel sheet structure, the core extender (34) of each inductor element (26) is of a second magnetic material that is different from the first magnetic material, the second magnetic material is ferromagnetic, and the core extender (34) is a monolithic structure.

14. The electric motor (10) according to any of the claims 1 to 13, wherein the stator (12) comprises a stator yoke (56) interconnecting the inductor cores (30) of the inductor elements (26).

15. The electric motor (10) according to any of the claims 1 to 14, wherein the electric motor (10) further comprises a housing (16) that encloses and supports the stator (12) and, the rotor (14) further comprises a motor shaft (18), the magnet holder (20) is fixed relative to the motor shaft (18), and the electric motor (10) further comprises a bearing (28) that rotationally supports the rotor (14) relative to the housing (16).
